# EUROPEAN PATENT APPLICATION

(11) **EP 4 769 519 A1**
(43) Date of publication of application: **01.07.2026**
(21) Application number: 24934818.6
(22) Date of filing: 31.10.2024
(51) Int. Cl.: H01M 4/131, H01M 10/0567, H01M 10/0525

(54) **BATTERY AND ELECTRIC DEVICE**

(30) Priority: 07.04.2024 CN 202410407695
(71) Applicant: Contemporary Amperex Technology Co., Limited, Ningde, Fujian 352100 (CN)
(72) Inventor: WU, Kai, Ningde, Fujian 352100 (CN); ZHONG, Ming, Ningde, Fujian 352100 (CN); JIN, Chao, Ningde, Fujian 352100 (CN); WU, Zirui, Ningde, Fujian 352100 (CN); YAN, Guanfusheng, Ningde, Fujian 352100 (CN)
(74) Representative: Gong, Jinping
(86) International application number: PCT/CN2024/129085
(87) International publication number: WO 2025/213754

(57) **Abstract**

The present application provides a battery and an electrical apparatus. The battery comprises a case, an electrode assembly and an electrolyte solution. The case is provided with an accommodating cavity inside, and the electrode assembly and the electrolyte solution are both arranged within the accommodating cavity. The electrode assembly comprises a positive electrode plate comprising a positive electrode current collector and a positive electrode active layer located on at least one surface of the positive electrode current collector. The positive electrode active layer comprises a positive electrode active material having a chemical formula of Liₓ(NiₐCo_{b}Mn_{c})_{1-d}M_{d}O_{2-y}A_{y}; the K_{EL} of the battery satisfies 1.6g/Ah≤Kr₁≤1.9g/Ah, K_{EL} represents the ratio of the mass of free electrolyte solution to the rated capacity of the battery, in units of g/Ah; and the space utilization rate η of the battery is >0.8.

## Description

### CROSS-REFERENCE TO RELATED APPLICATIONS

The present application claims priority to Chinese patent application No. 2024104076959 filed on April 7, 2024 and entitled "BATTERY AND ELECTRICAL APPARATUS," which is hereby incorporated by reference in its entirety.

### TECHNICAL FIELD

The present application relates to the technical field of batteries, and in particular, to a battery and an electrical apparatus.

### BACKGROUND

The statements provided here are intended solely to offer background information relevant to the present application and do not necessarily constitute the prior art.

Energy density is one of the important indicators reflecting battery performance. In order to improve the energy density of batteries, the traditional approach often focuses on the development of electrode active materials, to improve the energy density of batteries by looking for active materials with high gram capacity. Among them, the positive electrode material with a high nickel content has a high gram capacity, which may be beneficial to improving the energy density of batteries. However, when positive electrode materials with a high nickel content are used in batteries, it is difficult to effectively balance the energy density and cycle performance of the batteries.

### SUMMARY OF THE INVENTION

A first aspect of the present application provides a battery, comprising a case, an electrode assembly and an electrolyte solution; where the case has an accommodating cavity inside, and the electrode assembly and the electrolyte solution are both arranged in the accommodating cavity; the electrode assembly comprises a positive electrode plate, the positive electrode plate comprises a positive electrode current collector and a positive electrode active layer located on at least one surface of the positive electrode current collector; the positive electrode active layer comprises a positive electrode active material having a chemical formula of Liₓ(NiₐCo_{b}Mn_{c})_{1-d}M_{d}O_{2-y}A_{y}, wherein 0.2≤x≤1.2, 0.6≤a≤1, 0<b≤0.2, 0<c≤0.4, 0≤d<1, 0≤y<2, M comprises at least one of Al, Mg, Fe, Cu, V, Ti, Zr, W, Sb, Dy and Te, and A comprises at least one of P, S and a halogen element.

The K_{EL} of the battery satisfies 1.6 g/Ah≤K_{EL}≤1.9 g/Ah, where K_{EL} represents the ratio of the mass of free electrolyte solution to the rated capacity of the battery, in units of g/Ah.

The space utilization rate η of the battery is ≥ 0.8, and the space utilization rate represents the ratio of the volume of the electrode assembly to the volume of the accommodating cavity.

In the above-mentioned battery, by selecting a positive electrode material with a suitable nickel content and adapting the positive electrode material to the K_{EL} and space utilization rate of the battery, it is beneficial to giving full play to the advantage of gram capacity of the positive electrode material, enabling the battery to have a high energy density, and at the same time it is beneficial to improving the battery's cycle performance, so that the battery has a good cycle life, and thus has both high energy density and good cycle performance.

In some embodiments, 0.81<η≤0.9. When the space utilization rate is within this range, the battery can have a relatively suitable expansion space inside while having both high energy density and good cycle performance, thereby reducing the risk of high pressure inside the battery during use.

In some embodiments, the electrode assembly further comprises a negative electrode plate, which comprises a negative electrode current collector and a negative electrode active layer located on at least one surface of the negative electrode current collector; wherein 1≤k≤1.15, k represents the ratio of the projected area of the negative electrode active layer on the negative electrode current collector to the projected area of the positive electrode active layer on the positive electrode current collector. k within this range can make the positive electrode plate and the negative electrode plate better adapted to each other, and reduce the risk of lithium plating in the negative electrode plate.

In some embodiments, the areal density of the negative electrode active layer is 0.12g/1540.25 mm² to 0.2g/1540.25 mm². The areal density of the negative electrode active layer within this range can enable the negative electrode plate to have a high energy density, which is better adapted to the positive electrode plate and better promotes the use of the capacity of the positive electrode active material.

In some embodiments, the thickness of the negative electrode current collector is 4 µm to 8 µm. The thickness of the negative electrode current collector within this range can make the negative electrode plate have good stability. At the same time, it can promote the increase of the thickness of the negative electrode active layer while maintaining the appropriate thickness of the negative electrode plate, which is conducive to further improving the energy density of the negative electrode plate.

In some embodiments, the thickness of the positive electrode current collector is 9 µm to 15 µm. The thickness of the positive electrode current collector can be small. While maintaining high energy density and good cycle life, the thickness of the positive electrode current collector being small can reduce the weight of the battery on the one hand and on the other hand increase the amount of positive electrode active material used, thereby further improving the energy density of the battery.

In some embodiments, the areal density of the positive electrode active layer is 0.21g/1540.25 mm² to 0.32g/1540.25 mm². The areal density of the positive electrode active layer within this range can enable the positive electrode active material to have a appropriate usage amount, which is beneficial for the battery to have a high energy density.

In some embodiments, the compacted density of the positive electrode plate is 3.2 g/cm³ to 3.7 g/cm³. When the compacted density of the positive electrode plate is within this range, the positive electrode active layer can maintain an appropriate thickness while the battery energy density is improved, reducing the adverse effects of material expansion during charging and discharging on the cycle performance of the battery, and thus improving the cycle life of the battery.

In some embodiments, the positive electrode active material comprises single crystal particles. There are almost no grain boundaries between single crystal particles. During the cycle process, the probability of intergranular cracks in single crystal particles is low, which can alleviate the side reactions between the positive electrode plate and the electrolyte solution, thereby extending the cycle life of the battery.

In some embodiments, the single crystal particles comprise first single crystal particles and second single crystal particles, and the particle size of the first single crystal particles is smaller than the particle size of the second single crystal particles. By combining the first single crystal particles and the second single crystal particles with different particle sizes, the damage of the active material to the positive electrode current collector during the compaction process can be further reduced, and the cycle performance of the battery can be further improved.

In some embodiments, the particle size ratio of the first single crystal particle to the second single crystal particle is (0.1-0.5):1. Within this particle size ratio range, the first single crystal particles and the second single crystal particles are better adapted to each other, which is beneficial to improving the compacted density of the positive electrode plate and further promoting improvement of the energy density of the battery.

In some embodiments, the positive electrode plate further comprises a primer layer; the primer layer is located between the positive electrode active layer and the positive electrode current collector, and the primer layer comprises a conductive agent. The provision of the primer layer can alleviate the damage of the active material to the positive electrode current collector during the compaction process, thereby increasing the compacted density of the positive electrode active layer and further improving the energy density of the battery. At the same time, the damage to the positive electrode current collector is reduced, which can enable the positive electrode plate to maintain a relatively stable structure during the cycling process of the battery, which is beneficial to improving the cycle performance of the battery. On the other hand, the contact between the electrolyte solution and the positive electrode current collector can be reduced, thus reducing the degree of corrosion of the electrolyte solution to the positive electrode current collector. The reduced degree of corrosion to the positive electrode current collector can enable the positive electrode plate to maintain a relatively stable structure during the cycling process of the battery, which is beneficial to improving the cycle performance of the battery.

In some embodiments, the thickness of the primer layer is 0.5 µm to 2 µm. The thickness of the primer layer within this range can maintain a more appropriate thickness of the positive electrode plate and thus a more appropriate volume of the battery while alleviating damage to the positive electrode current collector and reducing the contact between the electrolyte solution and the positive electrode current collector.

In some embodiments, the mass percentage of the conductive agent in the primer layer is 40% to 60%. At this point, the conductive coating has good conductivity, which is beneficial to improving the conductivity of the positive electrode plate.

In some embodiments, the conductive agent comprises one or more of superconducting carbon, acetylene black, carbon black, Ketjen black, carbon dots, carbon nanotubes, graphene, and carbon nanofibers.

In some embodiments, the electrolyte solution comprises a lithium salt, and the lithium salt comprises at least one of lithium hexafluorophosphate, lithium bis(fluorosulfonyl)imide, and lithium difluoro bis(oxalato)phosphate. By selection of the lithium salt, the cycle life of the battery can be further improved.

In some embodiments, the molar concentration of the lithium salt in the electrolyte solution is 1.1 mol/L to 1.5 mol/L. The molar concentration of the lithium salt within this range is beneficial to further improving the cycle life of the battery.

In some embodiments, the electrolyte solution comprises an additive, and the additive comprises at least one of lithium bis(fluorosulfonyl)imide, lithium difluoro bis(oxalato)phosphate, and fluoroethylene carbonate. The selection of the additive is beneficial to further improving the cycle life of the battery.

The second aspect of the present application provides an electrical apparatus. The electrical apparatus comprises the battery.

### BRIEF DESCRIPTION OF DRAWINGS

In order to better describe and illustrate the embodiments or examples provided in the present application, reference may be made to one or more drawings. The additional details or examples used to describe the drawings should not be considered as limiting the scope of the disclosed applications, currently described embodiments or examples, and any one of currently understood preferred embodiments of these applications. Moreover, in all of the drawings, identical parts are represented by identical reference numerals. In the drawings:
FIG. 1 is a schematic diagram of a battery cell according to an embodiment of the present application.
FIG. 2 is an exploded view of a battery cell according to an embodiment of the present application as shown in FIG. 1.
FIG. 3 is a schematic view of an electrical apparatus in which a battery serves as a power source according to an embodiment of the present application.

Description of reference numerals:
1, Battery cell; 11, Case; 12, Electrode assembly; 13, Cover plate; 2, Electrical apparatus.

### DETAILED DESCRIPTION

To facilitate understanding of the present application, the present application will be described more comprehensively below with reference to the relevant drawings. Preferred embodiments of the present application are shown in the accompanying drawings. The present invention may be embodied in many different forms and is not limited to the embodiments described herein. On the contrary, these embodiments are provided for the purpose of more thoroughly and completely understanding the content disclosed by the present application.

Unless otherwise defined, all technical and scientific terms used herein have the same meanings as commonly understood by those skilled in the field to which the present application belongs. Herein, the terms used in the specification of the present application are only for the purpose of describing specific embodiments and is not intended to limit the present application. The term "and/or" used herein comprises any and all combinations of one or more relevant items listed.

The "ranges" disclosed in the present application can be defined in the form of lower and upper limits. A given range is defined by selecting a lower limit and an upper limit, and the selected lower and upper limits define the boundaries of the particular range. The range defined in this way may comprise or may not comprise end values, any end value can be comprised or excluded independently and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the maximum range values of 3, 4, and 5 are also listed, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to listing the parameter as, for example, an integer of 2, 3, 4, 5, 6, 7, 8, 9, 10, 11, 12, etc. For example, when a parameter is expressed as an integer selected from "2-10", it is equivalent to listing an integer of 2, 3, 4, 5, 6, 7, 8, 9, and 10.

The "plurality" involved in the present application, unless otherwise specified, refers to a number greater than 2 or equal to 2. For example, the "one or more" means one or greater than or equal to two.

Unless otherwise particularly stated, all embodiments and optional embodiments of the present application may be combined with each other to form new technical solutions.

Reference herein to "an embodiment" means that a particular feature, structure, or characteristic described in connection with the embodiment can be comprised in at least one example or embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments. The "implementation" mentioned herein is understood similarly.

It should be understood by those skilled in the art that in the method of each embodiment or example, the writing order of various steps does not imply a strict performing order to constitute any limitation on the implementation process. The detailed order of performing the various steps should be determined by its function and possible internal logic. Unless otherwise specified, all the steps in the present application can be carried out, either in order or randomly, preferably in order in some embodiments. For example, the method comprises steps (a) and (b), which means that the method may comprise steps (a) and (b) performed in order, or may comprise steps (b) and (a) performed in order. For example, the reference to the method may further comprise step (c), meaning that step (c) may be added to the method in any order. For example, the method may comprise steps (a), (b) and (c), or may further comprise steps (a), (c) and (b), or may further comprise steps (c), (a) and (b), and the like.

In the present application, unless otherwise specified, A (such as B) means that B is a non-limiting example of A, and may be understood as that A is not limited to B.

In the present application, the "optionally" and "optional" mean dispensable, that is, they mean any one selected from two parallel solutions of "presence" or "absence." If a plurality of "optional" appear in a technical solution, unless otherwise specified and in the case of no contradiction or mutually restrictive relationship, each "optional" is independent.

An embodiment of the present application provides a battery, which comprises a case, an electrode assembly and an electrolyte solution. The case is provided with an accommodating cavity inside, and the electrode assembly and the electrolyte solution are both accommodated within the accommodating cavity. The electrode assembly comprises a positive electrode plate comprising a positive electrode current collector and a positive electrode active layer located on at least one surface of the positive electrode current collector. The positive electrode active layer comprises a positive electrode active material having a chemical formula of Liₓ(NiₐCo_{b}Mn_{c})_{1-d}M_{d}O_{2-y}A_{y}, wherein 0.2≤x≤1.2, 0.6≤a≤1, 0<b≤0.2, 0<c≤0.4, 0≤d<1, 0≤y<2, M comprises at least one of Al, Mg, Fe, Cu, V, Ti, Zr, W, Sb, Dy and Te, and A comprises at least one of P, S and a halogen element. The K_{EL} of the battery satisfies 1.6 g/Ah≤K_{EL}≤1.9 g/Ah, where K_{EL} represents the ratio of the mass of free electrolyte solution to the rated capacity of the battery, in units of gram/ampere hour (g/Ah). The space utilization rate η of the battery is ≥ 0.8, and the space utilization rate represents the ratio of the volume of the electrode assembly to the volume of the accommodating cavity.

In the battery of this embodiment, by selecting a positive electrode material with a suitable nickel content and adapting the positive electrode material to the K_{EL} and space utilization rate of the battery, it is beneficial to giving full play to the advantage of gram capacity of the positive electrode material, enabling the battery to have a high energy density, and at the same time it is beneficial to improving the battery's cycle performance, so that the battery has a good cycle life, and thus has both high energy density and good cycle performance. For example, the energy density of the battery in one embodiment of the present application can reach more than 280 watt-hours/kilogram (Wh/kg).

Furthermore, in general, the compacted density of positive electrode active materials with a high nickel content is low. In order to obtain a high energy density, the thickness of the positive electrode active layer may be made large, which may cause the expansion of the electrode plate to be more obvious during the charge and discharge process, thereby affecting the cycle life of the battery. In this embodiment, by adapting the nickel-containing positive electrode material to the K_{EL} and space utilization rate of the battery, the battery can be made have both high energy density and good cycle life.

It is understandable that the case of the battery is usually square or cylindrical. The accommodating cavity of the square case is correspondingly square. The accommodating cavity of the cylindrical case is correspondingly cylindrical. When the case of the battery is square, the space utilization rate η=(length of the electrode assembly/length of the accommodation cavity)×(width of the electrode assembly/width of the accommodation cavity). When the case of the battery is cylindrical, the space utilization rate η=(diameter of the electrode assembly/diameter of the accommodation cavity)×(height of the electrode assembly/height of the accommodation cavity).

It can be understood that when the case of the battery is square, the width of the electrode assembly and the width of the accommodating cavity respectively represent the width of the electrode assembly and the width of the accommodating cavity in the same direction. The length of the electrode assembly and the length of the accommodating cavity respectively represent the length of the electrode assembly and the length of the accommodating cavity in the same direction. Optionally, the direction of width is perpendicular to the direction of length.

Optionally, the free electrolyte solution in the present application can be tested in the following manner: the battery is weighed and the mass is recorded as m1. The battery is disassembled, the electrolyte solution in the case is removed, the electrode plates are soaked in DMC for 16 hours (h), oven-dried, the mass of the case and the electrode assembly is weighed, and the mass is recorded as m2. The mass of the free electrolyte solution is m1-m2, which is the amount of free electrolyte solution.

Optionally, the rated capacity of the battery in the present application can be tested in the following manner: the battery is charged to 4.25 volts (V) at a constant current of 0.33 coulomb (C), and then charged to a cut-off current of 0.05C at a constant voltage. Then, the battery is discharged at 0.33C to 2.8V, and the discharge capacity is recorded as the rated capacity of the battery.

In some embodiments, 0.81≤η≤0.9. When the space utilization rate is within this range, the battery can have a relatively suitable expansion space inside while having both high energy density and good cycle performance, thereby reducing the risk of high pressure inside the battery during use. Optionally, the space utilization rate η can be 0.81, 0.82, 0.83, 0.84, 0.85, 0.86, 0.87, 0.88, 0.89, 0.9 or any value within the range consisting of any two of the above values.

It can be understood that when 0.6≤a≤1, the positive electrode active material has a high nickel content and a high gram capacity, which is beneficial for the battery to maintain a high energy density. Optionally, a can be 0.6, 0.65, 0.7, 0.75, 0.8, 0.85, 0.9, 0.95, 1 or any value within the range consisting of any two of the above values. Further optionally, 0.8≤a≤1. Further optionally, Liₓ(NiₐCo_{b}Mn_{c})_{1-d}M_{d}O_{2-y}A_{y} may be LiNi_{0.6}Co_{0.2}Mn_{0.2}O₂, LiNi_{0.7}Co_{0.1}Mn_{0.2}O₂, LiNi_{0.8}Co_{0.1}Mn_{0.1}O₂, LiNi_{0.92}Co_{0.06}Mn_{0.02}O₂, or the like.

As some optional examples of x, x can be 0.2, 0.3, 0.4, 0.5, 0.6, 0.7, 0.8, 0.9, 1, 1.1, 1.2 or any value within the range consisting of any two of the above values.

As some optional examples of b, b can be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2 or any value within the range consisting of any two of the above values.

As some optional examples of c, c can be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4 or any value within the range consisting of any two of the above values.

In some embodiments, 0≤d<1. For example, d can be 0, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9 or any value within the range consisting of any two of the above values. Optionally, 0≤d≤0.05.

In some embodiments, 0≤y<2. For example, y can be 0, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9 or any value within the range consisting of any two of the above values. Optionally, 0≤y≤0.05.

It can be understood that A comprises at least one of P, S and a halogen element, wherein the halogen element can be F, Cl, Br or the like.

Optionally, the K_{EL} of the battery may be 1.6 g/Ah, 1.65 g/Ah, 1.7 g/Ah, 1.75 g/Ah, 1.8 g/Ah, 1.85 g/Ah, 1.9 g/Ah or any value within the range consisting of any two of the above values. Further optionally, 1.67g/Ah≤K_{EL}≤1.85g/Ah.

Optionally, the space utilization rate η of the battery can be 0.8, 0.81, 0.82, 0.83, 0.84, 0.85, 0.86, 0.87, 0.88, 0.89, 0.9 or any value within the range consisting of any two of the above values.

In some embodiments, the electrode assembly further comprises a negative electrode plate, which comprises a negative electrode current collector and a negative electrode active layer located on at least one surface of the negative electrode current collector; wherein 1≤k≤1.15, k represents the ratio of the projected area of the negative electrode active layer on the negative electrode current collector to the projected area of the positive electrode active layer on the positive electrode current collector. k within this range can make the positive electrode plate and the negative electrode plate better adapted to each other, and reduce the risk of lithium plating in the negative electrode plate. Optionally, k can be 1, 1.01, 1.02, 1.03, 1.04, 1.05, 1.06, 1.07, 1.08, 1.09, 1.1, 1.11, 1.12, 1.13, 1.14, 1.15 or any value within the range consisting of any two of the above values.

In some embodiments, the areal density of the negative electrode active layer is 0.12 g/1540.25 square millimeter (g/1540.25 mm²) to 0.2 g/1540.25 mm², that is, 0.12 g/1540.25 mm²≤CW _{A}≤ 0.2 g/1540.25 mm². CW_{A} within this range can enable the negative electrode plate to have a high energy density, which is better adapted to the positive electrode plate and better promotes the use of the capacity of the positive electrode active material. CW_{A} may be 0.12 g/1540.25mm², 0.13 g/1540.25mm², 0.14 g/1540.25mm², 0.15 g/1540.25mm², 0.16 g/1540.25mm², 0.17 g/1540.25mm²,0.18 g/1540.25mm²,0.19 g/1540.25mm², 0.2 g/1540.25mm², or any value within the range consisting of any two of the above values.

In some embodiments, the thickness of the negative electrode current collector is 4 micrometers (µm) to 8 µm. The thickness of the negative electrode current collector within this range can make the negative electrode plate have good stability. At the same time, it can promote the increase of the thickness of the negative electrode active layer while maintaining the appropriate thickness of the negative electrode plate, which is conducive to further improving the energy density of the negative electrode plate. Optionally, the thickness of the negative electrode current collector may be 4 µm, 5 µm, 6 µm, 7 µm, 8 µm or any value within the range consisting of any two of the above values.

In some embodiments, the compacted density of the negative electrode plate is 1.2 gram/cubic centimeter (g/cm³) to 1.8 g/cm³. Optionally, the compacted density of the negative electrode plate may be 1.2 g/cm³, 1.3 g/cm³, 1.4 g/cm³, 1.5 g/cm³, 1.6 g/cm³, 1.7 g/cm³, 1.8 g/cm³ or any value within the range consisting of any two of the above values.

In some embodiments, the thickness of the positive electrode current collector is 9 µm to 15 µm. In this embodiment, the thickness of the positive electrode current collector can be small. While maintaining high energy density and good cycle life, the thickness of the positive electrode current collector being small can reduce the weight of the battery on the one hand and on the other hand increase the amount of positive electrode active material used, thereby further improving the energy density of the battery. Optionally, the thickness of the positive electrode current collector is ≤13 µm. Optionally, the thickness of the negative electrode current collector may be 9 µm, 10 µm, 11 µm, 12 µm, 13 µm, 14 µm,15 µm or any value within the range consisting of any two of the above values.

In some embodiments, the areal density CWc of the positive electrode active layer is 0.21 g/1540.25mm² to 0.32 g/1540.25mm². The areal density of the positive electrode active layer within this range can enable the positive electrode active material to have a appropriate usage amount, which is beneficial for the battery to have a high energy density. Optionally, the areal density of the positive electrode active layer may be 0.21 g/1540.25 mm², 0.22 g/1540.25 mm², 0.23 g/1540.25 mm², 0.24 g/1540.25 mm², 0.25 g/1540.25 mm², 0.26 g/1540.25 mm², 0.27 g/1540.25 mm², 0.28 g/1540.25 mm², 0.29 g/1540.25 mm², 0.3 g/1540.25 mm², 0.31 g/1540.25 mm² or any value within the range consisting of any two of the above values.

In some embodiments, the compacted density of the positive electrode plate is 3.2 g/cm³to 3.7 g/cm³. When the compacted density of the positive electrode plate is within this range, the positive electrode active layer can maintain an appropriate thickness while the battery energy density is improved, reducing the adverse effects of material expansion during charging and discharging on the cycle performance of the battery, and thus improving the cycle life of the battery. Optionally, the compacted density of the positive electrode plate may be 3.2 g/cm³, 3.3 g/cm³, 3.4 g/cm³, 3.5 g/cm³, 3.6 g/cm³, 3.7 g/cm³ or any value within the range consisting of any two of the above values.

Optionally, in the present application, CW_{A} can be tested in the following manner: the negative electrode plate is punched to obtain a small disc of 1540.25 square millimeters (mm²), and the mass of the small disc is weighed. The negative electrode active layer is removed, the negative electrode current collector is cleaned with NMP, and then the mass of the negative electrode current collector is weighed. CW_{A} is obtained by subtracting the mass of the negative electrode current collector from the mass of the small disc. The thickness of the negative electrode current collector after cleaned is measured.

In the present application, CWc can be tested in the following manner: the positive electrode plate is punched to obtain a small disc of 1540.25 mm², and the mass of the small disc is weighed. The positive electrode active layer is removed, the positive electrode current collector is cleaned with NMP, and then the mass of the positive electrode current collector is weighed. CWc is obtained by subtracting the mass of the positive electrode current collector from the mass of the small disc. The thickness of the positive electrode current collector after cleaned is measured.

In some embodiments, the positive electrode active material comprises single crystal particles. There are almost no grain boundaries between single crystal particles. During the cycle process, the probability of intergranular cracks in single crystal particles is low, which can alleviate the side reactions between the positive electrode plate and the electrolyte solution, thereby extending the cycle life of the battery. In addition, single crystal particles can effectively inhibit the irreversible phase transition of the material from the H2 crystal phase to the H3 crystal phase during the charge and discharge process, further improving the cycle performance of the battery.

In some embodiments, the single crystal particles comprise first single crystal particles and second single crystal particles, and the particle size of the first single crystal particles is smaller than the particle size of the second single crystal particles. By combining the first single crystal particles and the second single crystal particles with different particle sizes, the damage of the active material to the positive electrode current collector during the compaction process can be further reduced, and the cycle performance of the battery can be further improved.

It can be understood that the size relationship between the first single crystal particle and the second single crystal particle can be tested in the following manner: taking a cross section along the thickness direction of the positive electrode plate, observing the cross section through a scanning electron microscope (SEM), and then obtaining the size relationship between the first single crystal particle and the second single crystal particle.

Optionally, the particle size ratio of the first single crystal particle to the second single crystal particle is (0.1-0.5):1. Within this particle size ratio range, the first single crystal particles and the second single crystal particles are better adapted to each other, which is beneficial to improving the compacted density of the positive electrode plate and further promoting improvement of the energy density of the battery. Optionally, the particle size ratio between the first single crystal particle and the second single crystal particle may be 0.1:1, 0.2:1, 0.3:1, 0.4:1, 0.5:1 or any value within the range consisting of any two of the above values.

In some embodiments, the positive electrode plate further comprises a primer layer. The primer layer is located between the positive electrode active layer and the positive electrode current collector, and the primer layer contains a conductive agent. The provision of the primer layer can alleviate the damage of the active material to the positive electrode current collector during the compaction process, thereby increasing the compacted density of the positive electrode active layer and further improving the energy density of the battery. At the same time, the damage to the positive electrode current collector is reduced, which can enable the positive electrode plate to maintain a relatively stable structure during the cycling process of the battery, which is beneficial to improving the cycle performance of the battery. On the other hand, the contact between the electrolyte solution and the positive electrode current collector can be reduced, thus reducing the degree of corrosion of the electrolyte solution to the positive electrode current collector. The reduced degree of corrosion to the positive electrode current collector can enable the positive electrode plate to maintain a relatively stable structure during the cycling process of the battery, which is beneficial to improving the cycle performance of the battery. It will be appreciated that the primer layer may be prepared by a gravure process.

Optionally, the thickness of the primer layer is 0.5 µm to 2 µm. The thickness of the primer layer within this range can maintain a more appropriate thickness of the positive electrode plate and thus a more appropriate volume of the battery while alleviating damage to the positive electrode current collector and reducing the contact between the electrolyte solution and the positive electrode current collector. For example, the thickness of the primer layer may be 0.5 µm, 0.8 µm, 1 µm, 1.2 µm, 1.5 µm, 1.8 µm, 2 µm or any value within the range consisting of any two of the above values.

Optionally, the mass percentage of the conductive agent in the primer layer is 40% to 60%. At this point, the conductive coating has good conductivity, which is beneficial to improving the conductivity of the positive electrode plate. Optionally, the mass percentage of the conductive agent in the primer layer can be 40%, 42%, 45%, 48%, 50%, 52%, 55%, 58%, 60% or any value within the range consisting of any two of the above values.

Optionally, the conductive agent comprises one or more of superconducting carbon, acetylene black, carbon black, Ketjen black, carbon dots, carbon nanotubes, graphene, and carbon nanofibers.

In some embodiments, the primer layer also comprises a binder, which is beneficial to improving the binding force between the positive electrode active layer and the positive electrode current collector. Optionally, the binder comprises polyacrylate.

In some embodiments, the electrolyte solution comprises a lithium salt, and the lithium salt comprises at least one of lithium hexafluorophosphate, lithium bis(fluorosulfonyl)imide, and lithium difluoro bis(oxalato)phosphate. By selection of the lithium salt, the cycle life of the battery can be further improved. Optionally, the molar concentration of the lithium salt in the electrolyte solution is 1.1 molar/liter (mol/L) to 1.5 mol/L. The molar concentration of the lithium salt within this range is beneficial to further improving the cycle life of the battery. Optionally, the molar concentration of the lithium salt in the electrolyte solution may be 1.1 mol/L, 1.2 mol/L, 1.3 mol/L, 1.4 mol/L, 1.5 mol/L or any value within the range consisting of any two of the above values.

In some embodiments, the electrolyte solution comprises an additive, and the additive comprises at least one of lithium bis(fluorosulfonyl)imide, lithium difluoro bis(oxalato)phosphate, and fluoroethylene carbonate. The selection of the additive is beneficial to further improving the cycle life of the battery.

In a further embodiment, the present application provides an electrical apparatus. The electrical apparatus comprises the above battery.

The battery and the electrical apparatus of the present application are described below with reference to the accompanying drawings properly.

Generally, the battery comprises a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

The positive electrode plate comprises a positive electrode current collector and a positive electrode active layer arranged on at least one surface of the positive electrode current collector, and the positive electrode active layer comprises a positive electrode active material.

By way of non-limiting example, the positive electrode current collector has two surfaces opposite to each other in a thickness direction of the positive electrode current collector, and the positive electrode active material layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can comprise a polymer material substrate layer and a metal layer formed on at least one surface of the polymer material substrate layer. The composite current collector can be formed by forming a metal material on the polymer material substrate. In the positive electrode current collector, non-limiting examples of the metal material may comprise one or more of aluminum, an aluminum alloy, nickel, a nickel alloy, titanium, a titanium alloy, silver, and a silver alloy. In the positive electrode current collector, non-limiting examples of the polymer material substrate may comprise one or more of substrates, such as polypropylene (PP), polyethylene terephthalate (PET), polybutylene terephthalate (PBT), polystyrene (PS), polyethylene (PE), etc.

In some of these embodiments, the positive electrode active layer also optionally comprises a positive electrode active material for batteries, which is well known in the art. By way of non-limiting example, these positive electrode active materials can comprise one or more of the following materials: a lithium-containing phosphate with an olivine structure, a lithium transition metal oxide, and respective modified compounds thereof. Non-limiting examples of the lithium-transition metal oxide may comprise, but are not limited to, one or more of a lithium-cobalt oxide (such as LiCoO₂), a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and a modified compound thereof. Non-limiting examples of the lithium-containing phosphate of olivine structure may comprise, but are not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium-cobalt oxide may comprise LiCoO₂; non-limiting examples of the lithium-nickel oxide may comprise LiNiO₂; non-limiting examples of the lithium-manganese oxide may comprise, e.g., LiMnO₂or LiMn₂O₄; and non-limiting examples of the lithium-nickel-cobalt-manganese oxide may comprise, e.g., LiNi_{1/3}Co_{1/3}Mn_{1/3}O₂(or abbreviated as NCM₃₃₃), LiNi_{0.5}Co_{0.2}Mn_{0.3}O₂( or abbreviated as NCM₅₂₃), LiNi_{0.5}Co_{0.25}Mn_{0.25}O₂(or abbreviated as NCM₂₁₁), LiNi_{0.6}Co_{0.2}Mn_{0.2}O₂(or abbreviated as NCM₆₂₂), or LiNi_{0.8}Co_{0.1}Mn_{0.1}O₂(or abbreviated as NCM₈₁₁). Non-limiting examples of the lithium-nickel-cobalt-aluminum oxide may comprise LiNi_{0.8}Co_{0.15}Al_{0.05}O₂.

In some embodiments, the mass percentage of the positive electrode active material of Liₓ(NiₐCo_{b}Mn_{c})_{1-d}M_{d}O₂-_{y}A_{y} in the positive electrode active layer is 90% to 100%.

In some of the embodiments, the positive electrode active layer further optionally comprises a binder. Asa non-limiting example, the binder may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some of the embodiments, the positive electrode active layer further optionally comprises a conductive agent. As a non-limiting example, the conductive agent may comprise one or more of superconducting carbon, acetylene black, carbon black, Ketjen black, carbon dots, carbon nanotubes, graphene, and carbon nanofibers.

In some of the embodiments, the positive electrode plate can be prepared by the following steps: dispersing the components for preparing the positive electrode plate, such as the positive electrode active material, the conductive agent, the binder and any other component, in a solvent to form positive electrode slurry; and coating at least one surface of a positive electrode current collector with the positive electrode slurry, and performing oven-drying, cold pressing and other processes to obtain the positive electrode plate. The type of the solvent may be selected from, but is not limited to, any one in the above embodiments, such as N-methylpyrrolidone (NMP). The positive electrode slurry may be coated on a single surface of the positive electrode current collector or on both surfaces of the positive electrode current collector. The positive electrode slurry may be coated on a single surface of the positive electrode current collector or on both surfaces of the positive electrode current collector. The solid content of the positive electrode slurry may be 40 weight% (wt%) to 80 wt%. The viscosity of the positive electrode slurry at room temperature can be adjusted to 5000 millipascals·second (mPa·s) to 25000 mPa·s.

### Negative electrode plate

The negative electrode plate comprises a negative electrode current collector and a negative electrode active layer arranged on at least one surface of the negative electrode current collector, where the negative electrode active layer comprises a negative electrode active material.

As a non-limiting example, the negative electrode current collector has two surfaces opposite in its own thickness direction, and the negative electrode active material layer is arranged on any one or both of the two opposite surfaces of the negative electrode current collector.

In some of the embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material on the polymer material substrate. In the negative electrode current collector, non-limiting examples of the metal material may comprise one or more of copper, a copper alloy, nickel, a nickel alloy, titanium, a titanium alloy, silver, and a silver alloy, etc. In the negative electrode current collector, non-limiting examples of the polymer material substrate may comprise one or more of substrates, such as polypropylene (PP), polyethylene terephthalate (PET), polybutylene terephthalate (PBT), polystyrene (PS), polyethylene (PE), etc.

In some of the embodiments, the negative electrode active material can be a negative electrode active material well known in the art for batteries. As anon-limiting example, negative electrode active materials may comprise one or more of the following materials: artificial graphite, natural graphite, soft carbon, hard carbon, silicon-based material, tin-based material, lithium titanate, and the like. The silicon-based material may comprise one or more of elemental silicon, a silicon-oxygen compound, a silicon-carbon composite, a silicon-nitrogen composite, or a silicon alloy. The tin-based material may comprise one or more of elemental tin, a tin oxide, and a tin alloy. However, the present application is not limited to these materials, and other conventional materials useful as negative electrode active materials for batteries can also be used. One of these negative active materials may be used alone, or two or more of these positive active materials may be used in combination.

In some of the embodiments, the negative electrode active layer further optionally comprises a binder. The binder may comprise one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of the embodiments, the negative electrode active layer further optionally comprises a conductive agent. The conductive agent may comprise one or more of superconducting carbon, acetylene black, carbon black, Ketjen black, carbon dots, carbon nanotubes, graphene, and carbon nanofibers.

In some of the embodiments, the negative electrode active material layer further optionally comprises other auxiliaries, e.g., a thickener (such as sodiumcarboxymethyl cellulose(CMC-Na)).

In some of the embodiments, the negative electrode plate can be prepared by the following steps: dispersing the components for preparing the negative electrode plate, such as the negative electrode active material, the conductive agent, the binder and any other component into a solvent (a non-limiting example of the solvent is e.g., deionized water) to form negative electrode slurry; and coating at least one surface of the negative electrode current collector with the negative electrode slurry, and performing processes of drying, cold pressing and the other processes to obtain the negative electrode plate. The negative electrode slurry may be coated on a single surface of the negative electrode current collector or on both surfaces of the negative electrode current collector. The solid content of the negative electrode slurry can be 40wt% to 60wt%. The viscosity of the negative electrode slurry at room temperature can be adjusted to 2000 mPa·s to 10000 mPa·s.

### Electrolyte

The electrolyte serves for conducting ions between the positive electrode plate and the negative electrode plate. The type of the electrolyte is not specifically limited in the present application and can be selected according to requirements. For example, the electrolyte can be liquid, gelled, or all solid.

In some embodiments, an electrolyte solution is used as the electrolyte. The electrolyte solution comprises an electrolyte salt and a solvent.

In some of the embodiments, the electrolyte salt can comprise one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro bis(oxalato)phosphate (LiDFOP), and lithium tetrafluoro(oxalato)phosphate (LiTFOP).

In some of the embodiments, the solvent may comprise one or more of ethylene carbonate (EC, 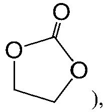 propylene carbonate (PC, 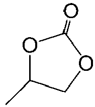 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 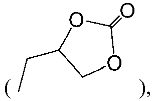 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and diethyl sulfone.

In some of the embodiments, the electrolyte solution further optionally comprises an additive. For example, the additive can comprise a negative electrode film-forming additive and a positive electrode film-forming additive and can further comprise additives that can improve some properties of the battery, for example, an additive that improves the overcharging performance of the battery and an additive that improves the high- or low-temperature performance of the battery.

In some embodiments, the additive in the electrolyte solution may comprise, but is not limited to, one or more of fluoroethylene carbonate (FEC), difluoroethylene carbonate (DFEC), trifluoromethylethylene carbonate (TFPC), and the like.

### Separator

In some of the embodiments, the battery also comprises a separator. The type of the separator is not particularly limited in the present application, and any well-known separator with a porous structure having good chemical stability and mechanical stability can be selected.

In some of the embodiments, the material of the separator may be one or more of glass fiber, non-woven cloth, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the thickness of the separator is 6 µm to 40 µm, optionally 12 µm to 20 µm.

In some of the embodiments, the positive electrode plate, the negative electrode plate, and the separator can be made into an electrode assembly by a winding process or a lamination process.

In some of the embodiments, the battery can comprise an outer package. The outer package can be used for encapsulating the above electrode assembly and electrolyte.

In some of the embodiments, the outer package of the battery can be a hard shell, such as a hard plastic shell, an aluminum shell, or a steel shell. The outer package of the battery may also be a soft package, such as a pouch-type soft package. The material of the pouch may be plastic, and further, non-limiting examples of the plastic may comprise one or more of polypropylene, polybutylene terephthalate, and polybutylene succinate.

The battery comprises at least one battery cell. The battery may comprise one or more battery cells.

In the present application, unless otherwise specified, a "battery cell" refers to a basic unit that can realize the mutual conversion of chemical energy and electrical energy, and further, generally speaking, at least comprises a positive electrode plate, a negative electrode plate and an electrolyte solution. During the charging and discharging process of the battery, active ions are intercalated and deintercalated back and forth between the positive electrode plate and the negative electrode plate. The electrolyte serves to conduct active ions between the positive electrode plate and the negative electrode plate.

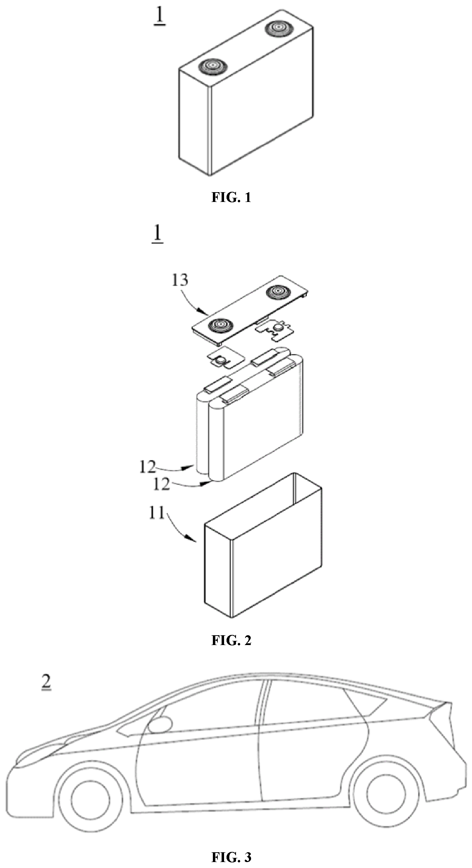

The shape of the battery cell is not particularly limited in the present application, and may be a cylinder shape, a square shape, or any other shape. For example, FIG. 1 shows a battery cell 1 with a square structure as an example. It can be understood that a cylindrical battery cell comprises a cylindrical case having a cylindrical accommodating cavity inside. The square battery cell comprises a square case having a square accommodating cavity inside.

In some of the embodiments, referring to FIG. 2, the outer package can comprise a case 11 and a cover plate 13. The case 11 can comprise a bottom plate and a side plate connected to the bottom plate, and the bottom plate and the side plate enclose to form an accommodating cavity. The case 11 has an opening in communication with the accommodating cavity, and the cover plate 13 can cover the opening to close the accommodating cavity. The positive electrode plate, the negative electrode plate, and the separator can be made into an electrode assembly 12 by a winding process or a lamination process. The electrode assembly 12 is packaged in the accommodating cavity. An electrolyte solution infiltrates into the electrode assembly 12. The number of electrode assemblies 12 comprised in the battery cell 1 may be one or more, and may be selected by those skilled in the art according to actual requirements.

The battery may be a battery module or a battery pack.

The battery module comprises at least one battery cell. The number of battery cells comprised in the battery module may be one or more, and the appropriate number may be selected by those skilled in the art according to the application and capacity of the battery module.

In the battery module, a plurality of battery cells can be sequentially arranged in the length direction of the battery module. Of course, any other arrangements are also possible. Furthermore, the plurality of battery cells may be fixed by fasteners.

Optionally, the battery module may further comprise a shell having an accommodating space, in which the plurality of battery cells are accommodated.

In some of the embodiments, the above battery modules may be further assembled into a battery pack, the number of battery modules comprised in the battery pack may be one or more, and the appropriate number may be selected by those skilled in the art based on the application and capacity of the battery pack.

The battery pack can comprise a battery box and a plurality of battery modules provided in the battery box. The battery box comprises an upper box and a lower box, wherein the upper box can cover the lower box and forms an enclosed space for accommodating the battery module. The plurality of battery modules may be arranged in the battery box in any manner.

In addition, the present application further provides an electrical apparatus. The electrical apparatus comprises the battery provided by the present application. The battery may be used as a power source of the electrical apparatus, or may be used as an energy storage unit of the electrical apparatus. The electrical apparatus may comprise, but is not limited to, a mobile device, an electric vehicle, an electric train, a ship, a satellite, an energy storage system, etc. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, etc.

For the electrical apparatus, the battery can be selected according to the requirements during use.

FIG. 3 is an electrical apparatus 2 as an example. The electrical apparatus is an all-electric vehicle, a hybrid electric vehicle, a plug-in hybrid electric vehicle, etc. In order to satisfy the requirements of the electrical apparatus for high power and high energy density of the battery, the battery pack or battery module can be employed.

The device used as another example can be, for example, a mobile phone, a tablet computer, a laptop, etc. The device is generally required to be light and thin and can use a battery as a power source.

To make the technical problems to be solved by the present application, the technical solutions, and the beneficial effects clearer, the present application is further described below in detail with reference to embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

In embodiments in which no specific technologies or conditions are specified, technologies or conditions described in the literature in the art or product specifications are followed. The reagents or instruments used without manufacturer indicated are all commercially available conventional products.

### Example 1

In this embodiment, the positive electrode active material is LiNi_{0.6}Co_{0.2}Mn_{0.2}O₂.

### (1) Preparation of positive electrode plate.

The positive electrode active material, a binder polyvinylidene fluoride and a conductive agent acetylene black were mixed according to a weight ratio of 98:1:1, and N-methylpyrrolidone was added as a solvent, and the slurry was stirred uniformly in vacuum to obtain a positive electrode slurry. The positive electrode slurry was coated on aluminum foil, dried and cold pressed to obtain a positive electrode plate.

### (2) Preparation of negative electrode plate

Graphite, a binder styrene butadiene rubber, and a conductive agent acetylene black were stirred and mixed according to a mass ratio of 98:1:1 at a rotation speed of 800 revolutions per second (r/s), and then wetted, kneaded, and dispersed to obtain a negative electrode slurry. The negative electrode slurry was coated on copper foil, dried and cold pressed to obtain a negative electrode plate.

### (3) Preparation of electrolyte solution

In a glove box under an argon atmosphere (H₂O<0.1 parts per million (ppm), O₂<0.1 ppm), the organic solvents ethylene carbonate (EC) and ethyl methyl carbonate (EMC) were mixed uniformly at a volume ratio of 3:7, 12.5 wt % (based on the total weight of ethylene carbonate and ethyl methyl carbonate) of LiPF₆ was dissolved in the organic solvent and stirred uniformly to obtain an electrolyte solution.
(4) A commercially available PP-PE copolymer microporous film with a thickness of 7 µm and an average pore size of 80 nm was used as the separator.
(5) The negative electrode plate, the separator, and the positive electrode plate are stacked and wound in order to obtain a wound battery cell. The battery cell is added into the outer package square aluminum shell and oven-dried, and the electrolyte solution was injected thereto. After the processes of packaging, standing, formation, aging, secondary packaging, capacity measurement, etc., a battery is obtained.

### Example 2 to Example 11, and Comparative Example 1 to Comparative Example 3

Compared with Example 1, the differences between Examples 2 to 11 and Comparative Examples 1 to 3 are: the type of positive electrode active material, the particle composition of the positive electrode active material, the compacted density PDc of the positive electrode plate, the compacted density PD_{A} of the negative electrode plate, the areal density CWc of the positive electrode active layer, the areal density CW_{A} of the negative electrode active layer, the K_{EL} of the battery, the space utilization rate η of the battery, and the ratio k of the projected area of the negative electrode active layer on the negative electrode current collector to the projected area of the positive electrode active layer on the positive electrode current collector are different, as shown in Table 1. Among them, for the battery of Example 4, a laminated battery was obtained by a lamination process. When the positive electrode active material comprises a first single crystal and a second single crystal, in corresponding embodiments, the first single crystal and the second single crystal differ in that their particle sizes are different.

### Test Example

### (1) Battery energy density test

The test method is: charge the battery cell at a constant current of 0.33C to 4.25V, then charge at a constant voltage to a cut-off current of 0.05C; then discharge the battery cell at a constant current of 0.33C to 2.8V, and record the discharge energy (in Wh). Weigh the mass of the battery cell (in kg), and calculate the energy density per unit mass of the battery cell from the discharge energy/mass (in Wh/kg). The test results are as shown in Table 1.

### (2) Battery cycling performance test

The test method is: test the capacity of the battery before cycling; charge at a constant current of 0.5C to 97% SOC, the cut-off voltage being 4.17V, charge at a constant voltage of 4.17V to 0.05C; discharge at 0.5C to 5% SOC, the cut-off voltage being 3.33V; repeat 100 cycles, test the capacity of the battery after cycling, and calculate the cycle retention rate after 100 cycles. The test results are as shown in Table 1. During the cycle, when the capacity retention rate deviates significantly from the normal downward trend, it is considered cycle diving.

**Table 1**

| | Positive electrode active material | | PDc | PD _{A} | CW _{C} | CW _{A} | K_{E L} | η | k | Energy density | Capacity retention rate | Diving or not |
|---|---|---|---|---|---|---|---|---|---|---|---|---|
| | Chemical formula | Particle composition | | | | | | | | | | |
| Example 1 | LiNi_{0.6}Co_{0.2} Mn_{0.2}O₂ | First single crystal | 3.4 | 1.55 | 0.25 | 0.15 | 1.6 | 0.82 | 1.07 | 280 | 99.1 | No |
| Example 2 | LiNi_{0.7}Co_{0.1} Mn_{0.2}O₂ | First single crystal | 3.4 | 1.55 | 0.25 | 0.15 | 1.6 | 0.82 | 1.08 | 282 | 98.5 | No |
| Example 3 | LiNi_{0.8}Co_{0.1} Mn_{0.1}O₂ | First single crystal | 3.4 | 1.55 | 0.25 | 0.15 | 1.6 | 0.82 | 1.09 | 285 | 98.2 | No |
| Example 4 | LiNi_{0.92}Co_{0.0 6}Mn_{0.02}O₂ | First single crystal | 3.3 | 1.3 | 0.313 | 0.15 | 1.67 | 0.81 | 1.05 | 300 | 98.0 | No |
| Example 5 | LiNi_{0.92}Co_{0.0 6}Mn_{0.02}O₂ | First single crystal | 3.5 | 1.8 | 0.279 | 0.165 | 1.75 | 0.82 | 1.07 | 281 | 98.1 | No |
| Example 6 | LiNi_{0.92}Co_{0.0 6}Mn_{0.02}O₂ | First single crystal | 3.5 | 1.8 | 0.279 | 0.165 | 1.75 | 0.82 | 1.06 | 288 | 98.0 | No |
| Example 7 | LiNi_{0.92}Co_{0.0 6}Mn_{0.02}O₂ | First single crystal | 3.5 | 1.8 | 0.279 | 0.165 | 1.75 | 0.82 | 1.09 | 271 | 97.9 | No |
| Example 8 | LiNi_{0.92}Co_{0.0 6}Mn_{0.02}O₂ | First:Second=0. 25:1 | 3.6 | 1.8 | 0.29 | 0.18 | 1.8 5 | 0.8 2 | 1.1 | 295 | 97.5 | No |
| Example 9 | LiNi_{0.92}Co_{0.0 6}Mn_{0.02}O₂ | First:Second=0. 35:1 | 3.6 | 1.8 | 0.29 2 | 0.18 | 1.8 5 | 0.8 2 | 1.08 | 293 | 97.6 | No |
| Example 10 | LiNi_{0.92}Co_{0.0 6}Mn_{0.02}O₂ | First:Second=0. 5:1 | 3.55 | 1.8 | 0.27 9 | 0.16 5 | 1.8 5 | 0.8 2 | 1.13 | 281 | 96.6 | No |
| Example 11 | LiNi_{0.92}Co_{0.0 6}Mn_{0.02}O₂ | First:Second=0. 1:1 | 3.65 | 1.8 | 0.27 9 | 0.17 5 | 1.9 | 0.8 2 | 1.09 | 285 | 95.3 | No |
| Comparative Example 1 | LiNi_{0.6}Co_{0.2} Mn_{0.2}O₂ | First single crystal | 3.5 | 1.6 | 0.25 | 0.15 | 1.5 | 0.82 | 1.07 | 275 | - | Yes |
| Comparative Example 2 | LiNi_{0.6}Co_{0.2} Mn_{0.2}O₂ | First single crystal | 3.55 | 1.65 | 0.25 | 0.15 | 2 | 0.82 | 1.07 | 270 | - | Yes |
| Comparative example 3 | LiNi_{0.6}Co_{0.2} Mn_{0.2}O₂ | First single crystal | 3.55 | 1.65 | 0.25 | 0.15 | 1.6 | 0.78 | 1.07 | 280 | - | Yes |

In Table 1, in the column of particle composition, "first single crystal" means that the particle composition of the positive electrode active material is first single crystal particles. "First:second" means that the particle composition of the positive electrode active material is a mixture of first single crystal particles and second single crystal particles at a corresponding particle size ratio. PDc represents the compacted density of the positive electrode plate, and its unit is g/cm³. PD_{A} represents the compacted density of the negative electrode plate, and its unit is g/cm³. CWc represents the areal density of the positive electrode active layer, and its unit is g/1540.25 mm². CW_{A} represents the areal density of the negative electrode active layer, and its unit is g/1540.25 mm². The unit of K_{EL} is g/Ah. η represents the space utilization rate of the battery. k represents the ratio of the projected area of the negative electrode active layer on the negative electrode current collector to the projected area of the positive electrode active layer on the positive electrode current collector. Energy density represents the energy density per unit mass of the battery cell, and its unit is Wh/kg. The capacity retention rate represents the capacity retention rate of the battery after 100 cycles, in %. "Diving or not" represents whether the battery dives during the cycle, where "No" means not diving and "Yes" means diving.

It can be seen from Table 1 that, by comparing the embodiments and the comparative examples, it can be seen that the battery in the embodiments has a higher energy density, indicating that when the nickel content of the positive electrode active material is high, when the K_{EL} and space utilization rate of the battery satisfy 1.6 g/Ah≤K_{EL}≤1.9 g/Ah, η≥0.8, a higher energy density can be exhibited.

The technical features of the embodiments described above can be combined arbitrarily. In order to make the description concise, not all possible combinations of the technical features in the above embodiments are described. However, all the combinations of the technical features should be considered as falling within the scope described in the specification provided that they do not conflict with each other.

The foregoing embodiments only describe several implementations of the present application, which are described relatively specifically and in detail, and thus, cannot be construed as a limitation to the scope of patent of the present invention. It should be noted that for those of ordinary skill in the art, a plurality of transformations and improvements can also be made without departing from the idea of the present application. These transformations and improvements all fall within the scope of protection of the present application. Therefore, the scope of protection of the patent of the present application shall be subject to the appended claims.

## Claims

1. A battery, comprising a case, an electrode assembly and an electrolyte solution; wherein the case has an accommodating cavity inside, and the electrode assembly and the electrolyte solution are both arranged in the accommodating cavity; the electrode assembly comprises a positive electrode plate, the positive electrode plate comprises a positive electrode current collector and a positive electrode active layer located on at least one surface of the positive electrode current collector; the positive electrode active layer comprises a positive electrode active material having a chemical formula of Liₓ(NiₐCo_{b}Mn_{c})_{1-d}M_{d}O_{2-y}A_{y}, wherein 0.2≤x≤1.2, 0.6≤a≤1, 0<b≤0.2, 0<c≤0.4, 0≤d<1, 0≤y<2, M comprises at least one of Al, Mg, Fe, Cu, V, Ti, Zr, W, Sb, Dy and Te, and A comprises at least one of P, S and a halogen element;
the K_{EL} of the battery satisfies 1.6 g/Ah≤K_{EL}≤1.9 g/Ah, wherein K_{EL} represents the ratio of the mass of free electrolyte solution to the rated capacity of the battery, in units of g/Ah;
the space utilization rate η of the battery is ≥ 0.8, and the space utilization rate represents the ratio of the volume of the electrode assembly to the volume of the accommodating cavity.

2. The battery according to claim 1, wherein the electrode assembly further comprises a negative electrode plate, which comprises a negative electrode current collector and a negative electrode active layer located on at least one surface of the negative electrode current collector; wherein 1≤k≤1.15, and k represents the ratio of the projected area of the negative electrode active layer on the negative electrode current collector to the projected area of the positive electrode active layer on the positive electrode current collector.

3. The battery according to claim 2, wherein the areal density of the negative electrode active layer is 0.12 g/1540.25 mm² to 0.2 g/1540.25 mm².

4. The battery according to claim 2 or 3, wherein the thickness of the negative electrode current collector is 4 µm to 8 µm.

5. The battery according to any one of claims 1 to 4, wherein 0.81≤η≤0.9.

6. The battery according to any one of claims 1 to 5, wherein the thickness of the positive electrode current collector is 9 µm to 15 µm.

7. The battery according to any one of claims 1 to 6, wherein the areal density of the positive electrode active layer is 0.21 g/1540.25 mm² to 0.32 g/1540.25 mm².

8. The battery according to any one of claims 1 to 7, wherein the compacted density of the positive electrode plate is 3.2 g/cm³ to 3.7 g/cm³.

9. The battery according to any one of claims 1 to 8, wherein the positive electrode active material comprises single crystal particles.

10. The battery according to claim 9, wherein the single crystal particles comprise first single crystal particles and second single crystal particles, and the particle size of the first single crystal particles is smaller than the particle size of the second single crystal particles.

11. The battery according to claim 10, wherein the particle size ratio of the first single crystal particles to the second single crystal particles is (0.1-0.5):1.

12. The battery according to any one of claims 1 to 11, wherein the positive electrode plate further comprises a primer layer; the primer layer is located between the positive electrode active layer and the positive electrode current collector, and the primer layer comprises a conductive agent.

13. The battery according to claim 12, wherein the thickness of the primer layer is 0.5 µm to 2 µm.

14. The battery according to claim 12 or 13, wherein the mass percentage of the conductive agent in the primer layer is 40% to 60%.

15. The battery according to any one of claims 12 to 14, wherein the conductive agent comprises at least one of superconducting carbon, acetylene black, carbon black, Ketjen black, carbon dots, carbon nanotubes, graphene, and carbon nanofibers.

16. The battery according to any one of claims 1 to 15, wherein the electrolyte solution comprises a lithium salt, and the lithium salt comprises at least one of lithium hexafluorophosphate, lithium bis(fluorosulfonyl)imide, and lithium difluoro bis(oxalato)phosphate.

17. The battery according to claim 16, wherein the molar concentration of the lithium salt in the electrolyte solution is 1.1 mol/L to 1.5 mol/L.

18. The battery according to any one of claims 1 to 17, wherein the electrolyte solution comprises an additive, and the additive comprises at least one of lithium bis(fluorosulfonyl)imide, lithium difluoro bis(oxalato)phosphate and fluoroethylene carbonate.

19. An electrical apparatus, comprising the battery according to any one of claims 1 to 18.
